(19) Europäisches Patentamt
European Patent Office
Office européen des brevets

(11) Veröffentlichungsnummer: **0 271 841**
**A2**

(12) # EUROPÄISCHE PATENTANMELDUNG

(21) Anmeldenummer: **87118397.6**

(51) Int. Cl.⁴: **C09J 3/14**

(22) Anmeldetag: **11.12.87**

(30) Priorität: **19.12.86 DE 3643399**

(43) Veröffentlichungstag der Anmeldung:
**22.06.88 Patentblatt 88/25**

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Artiga González, René-Andrés, Dr.**
**Bilker Allee 10**
**D-4000 Düsseldorf(DE)**
Erfinder: **Nicolaisen, Heinz-Christian**
**Ossietzkyring 4**
**D-3000 Hannover(DE)**
Erfinder: **Handwerk, Hans-Peter**
**Boschstrasse 57**
**D-4000 Düsseldorf 13(DE)**

(54) **Verfahren zum Verkleben von nicht transparenten Flächen und dazu verwendbare Zusammensetzungen.**

(57) Verfahren zum Verkleben von nicht transparenten Flächen mittels Photoinitiatoren und Sensibilisatoren vernetzbaren Monemersysteme, bestehend aus wasserfreien Zusammensetzungen mit einem Gehalt an ein oder mehreren ethylenische Doppelbindungen aufweisenden, polymerisierbaren Monomeren, einem durch elektromagnetische Strahlung anregbaren Sensibilisator, einem oxidierbaren Photoinitiator sowie gegebenenfalls üblichen Verdickungsmitteln. Haftungsverbesserern und Beschleunigern, wobei die Verwendung des Verfahrens und der offenbarten Zusammensetzung zum Verbinden metallische Oberflächen aufweisenden Werkstoffen besonders geeignet ist.

EP 0 271 841 A2

Xerox Copy Centre

# Verfahren zum Verkleben von nicht transparenten Flächen und dazu verwendbare Zusammensetzungen

Die Erfindung betrifft ein Verfahren zum Verkleben von nicht transparenten Flächen und durch Photoinitiatoren vernetzbare, ein oder mehrere Monomere mit ethylenisch ungesättigten Doppelbindungen enthaltende Systeme polymerisierbarer Verbindungen zur Anwendung für diesen Zweck.

Die Bedeutung radikalisch polymerisierbarer, ein oder mehrere Monomere mit ethylenisch ungesättigten Doppelbindungen enthaltender Systeme auf dem Gebiet der Klebstoffe wächst ständig. Derartige Systeme enthalten häufig als Monomere kurzkettige, ungesättigte Carbonsäureester wie Methylmethacrylat, Cyclohexylmethacrylat oder Tetrahydrofurfurylmethacrylat, freie Methacrylsäure oder Mischungen derartiger Monomerer, wobei von diesen Methylmethacrylat dominiert. Derartige, Monomere enthaltende Reaktivklebstoffe sind sowohl als sogenannte "Zweikomponenten-Kleber" als auch als sogenannte "No-Mix-Systeme" kommerziell erhältlich.

Derartige Systeme weisen in der praktischen Anwendung oft gewisse Nachteile auf. Zum einen ist der Einsaztbereich derartiger Klebstoffe, bei denen die

Aushärtung der Klebemasse durch eine radikalische Polymerisation herbeigeführt wird, dadurch beschränkt, daß sie nur in Absesenheit von Sauerstoff vernetzen. Die Anwendung derartiger Klebstoffe ist dadurch gelegentlich etwas eingeengt. Weiter werden Acrylat-Klebstoffe in der Praxis als Zweikomponentenkleber formuliert, wodurch infolge der begrenzten Topfzeit die Anwendungsbreite derartiger Reaktivklebstoffe deutlich begrenzt ist.

Zwar ist es seit langer Zeit bekannt, daß Vinylmonomere unter Einsatz geeigneter Photoinitiatoren mit Hilfe elektromagnetischer Strahlung photopolymerisiert werden können (vgl. beispielsweise J. Hutchison et al., "Advances in Polymer Sciences" 14, 49 (1974) oder G. Oster und N. L. Yang, "Chemical Reviews" 68, 125 (1968)). Die Anwendung derartiger Photopolymerisationsverfahren im Bereich der Klebstoffe zeigt jedoch, daß es für die Erreichung einer zufriedenstellenden Aushärtung innerhalb einer praxisgerechten Zeit ("Setting Time") bei einer guten Qualität der Verklebung, d.h. hohen Zugscherfestigkeiten, erforderlich ist, relativ energiereiche elektromagnetische Strahlung für den Photopolymerisationsprozeß einzusetzen. Ließ sich eine energiereiche elektromagnetische Strahlung aus technischen Gründen nicht einsetzen oder standen nur schwache Strahlungsquellen zur Verfügung, so muß eine lange Belichtungszeit vorgesehen werden. Schließlich ließen sich nicht transparente Substrate mit photoinitiierten Vinylmonomersystemen unter dem Einfluß elektromagnetischer Strahlung unter Bedingungen der Praxis nicht fachgerecht verkleben.

Aus der DE-OS 17 20 906 ist ein Verfahren zur Polymerisation von festen, wasserlöslichen Vinylmonomeren, nämlich Salzen und wasserlöslichen Amiden, bekannt, bei dem ein Katalysatorgemisch aus einem Sensibilisator und einer organischen Sulfin-, Phosphin-oder Arsinverbindung der Monomermischung zugesetzt und das System einer Photopolymerisation unterworfen wird. Nach der genannten Druckschrift lassen sich so Schichten herstellen, die als Drucksplatten oder ähnliches gut geeignet sind, indem die belichteten Stellen polymerisiert sind und damit dem Einfluß von Lösungsmitteln oder ähnlichem widerstehen, während unbelichtete Stellen durch geeignete Lösungsmittel ausgewaschen werden und damit dem Lichtmuster entsprechende Platten hergestellt werden können. Als Basis für reaktive Klebstoffe sind die in der genannten Druckschrift aufgeführten, wasserlöslichen Vinylmonomere nicht geeignet.

Die Erfindung stellte sich zur Aufgabe, ein neues Klebeverfahren auf Basis von durch Photoinitiatoren vernetzbaren polymerisierbaren Verbindungen zur Verfügung zu stellen, die als Reaktivklebstoffsysteme geeignet sind. Bei den zu schaffenden Klebstoffsystemen sollte der Mechanismus der polymerisierenden Vernetzung so ablaufen, daß die Polymerisation durch elektromagnetische Strahlung induziert wird, jedoch der Polymerisationsprozeß selbst nach Initiation auch ohne weitere Bestrahlung fortschreitet. Das neue Verfahren sollte damit eine Aushärtung des Klebstoffes im Dunkel der Klebefuge möglich machen.

Insbesondere sollte durch Strahlung aus dem sichtbaren Bereich des Spektrums die Polymerisation induziert werden können. Die Klebstoffe sollten als Ein-Komponenten-Systeme zu formulieren sein.

Gegenstand der Erfindung ist nun ein Verfahren zum Verkleben von nicht transparenten Flächen, welches wasserfreie Systeme aus

(a) ein oder mehrere ethylenische Doppelbindungen aufweisenden, polymerisierbaren Monomeren,

(b) durch elektromagnetische Strahlung anregbaren Sensibilisatoren,

(c) oxidierbare Photoinitiatoren sowie gegebenenfalls

(d) üblichen Verdickungsmitteln, Haftungsverbesserern und Beschleunigern auf wenigstens eine der zu verklebenden Flächen aufbringt und nach Belichtung für eine begrenzte Zeit die Flächen zusammenfügt und den initiierten Härtungsvorgang weiterlaufen läßt, bis eine feste Bindung entstanden ist.

Die Erfindung betrifft außerdem die Verwendung von wasserfreien Systemen zum oben genannten Zweck, die bestehen aus

(a) flüssigen ein oder mehrere ethylenische Doppelbindungen aufweisenden polymerisierbare Monomeren in einer Menge von 40 bis 90 Gew.-%,

(b) durch elektromagnetische Strahlung anregbaren Sensibilisatoren in einer Menge von 0,01 bis 2 Gew.-%,

(c) oxidierbaren Photoinitiatoren in einer Menge von 0,01 bis 5 Gew.-% sowie

(d) übliche Verdickungsmitteln in Mengen von 60 bis 5 Gew.-% und/oder üblichen Haftungsverbesserern in Mengen von 0,1 bis 10 Gew.-% und/oder üblichen Beschleunigern in Mengen von 1 bis 50 ppm enthalten, wobei sich alle Mengenangaben auf das Gesamtgewicht der Zusammensetzung beziehen.

Als Sensibilisatoren werden hier wie in der nachfolgenden Beschreibung und in den Patentansprüchen Verbindungen beziechnet, die durch elektromagnetische Strahlung vom Grundzustand in angeregte Zustände überführt werden können und zudem in der Lage sind, bei der Rückkehr in den Grundzustand die vorher absorbierte Energie auf ein anderes Molekül zu übertragen, das dabei in den angeregten Zustand überführt wird. Unter Photoinitiatoren werden hier solche Verbindungen verstanden, die - angeregt durch unmittelbaren Kontakt mit elektromagnetischer Strahlung oder mit energieübertragenden anderen Verbindungen, beispielsweise Sensibilisatoren - in der Lage sind, Radikale zu bilden und so eine Polymerisationsreaktion zu initiieren.

Die erfindungsgemäßen Zusammensetzungen enthalten vorzugsweise ein polymerisierbares Monomeres aus der Gruppe der Verbindungen der allgemeinen Formeln (I) und (II)

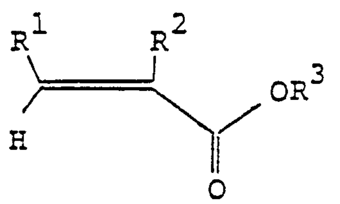 (I) 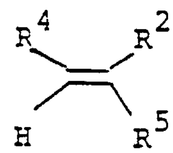 (II)

in denen

$R^1$ und $R^2$ unabhängig voneinander für Wasserstoff oder eine Methylgruppe,

$R^3$ für geradkettige oder verzweigte Alkylreste mit 1 bis 8 C-Atomen oder für durch eine oder mehrere Hydroxy-oder Aminogruppen substituierte, geradkettige oder verzweigte Alkylreste mit 1 bis 8 C-Atomen in der Alkylengruppe oder mit Phosphatgruppen verbundene Alkoxygruppen mit 1 bis 6 C-Atomen in der Alkylengruppe und

$R^4$ und $R^5$ unabhängig voneinander für Wasserstoff, Alkanoylgruppen mit 0 bis 4 C-Atomen im Alkylrest der zugehörigen Carbonsäure oder Arylreste, die gegebenenfalls durch Doppelbindungen aufweisende Gruppen substituiert sind, mit der Maßgabe stehen, daß nicht beide Reste $R^4$ und $R^5$ gleichzeitig für Wasserstoff stehen.

Es kommen also als polymerisierbare Monomere in bevorzugter Weise Verbindungen aus der Gruppe der Verbindungen der allgemeinen Formeln (I) und (II) in Frage, in denen beispielsweise $R^3$ für Methyl, Ethyl, n-Propyl, n-Butyl, n-Pentyl, n-Hexyl, n-Heptyl oder n-Octyl oder auch jeden beliebigen verzweigten Alkylrest, der mit den genannten Alkylresten isomer ist, steht. Dies bedeutet nichts Anderes, als daß als Verbindungen (I) solche Ester ungesättigter Carbonsäuren bevorzugt in Frage kommen, die mit geradkettigen oder verzweigten einwertigen Alkoholen gebildet wurden. Aus dieser Gruppe sind beispielsweise besonders bevorzugt die Acrylsäureester und Methacrylsäureester der einwertigen aliphatischen Alkohole sowie auch entsprechende Ester der Crotonsäure.

In einer weiteren bevorzugten Ausführungsform kommen als polymerisierbare Monomere Verbindungen aus der Gruppe der Verbindungen der allgemeinen Formel (I) in Frage, in der der Rest $R^3$ eine durch eine oder mehrere Hydroxy-oder Aminogruppen substituierte, geradkettige oder verzweigte Methyl-, Ethyl-, Propyl-, Butyl-, Pentyl-, Hexyl-, Heptyl-oder Octylgruppe sein kann. Dies bedeutet, daß als Verbindungen (I) die Ester ungesättigter Carbonsäuren mit zwei-oder mehrwertigen Hydroxy-oder Hydroxyaminoverbindungen Verwendung finden. Unter solche Verbindungen fallen in besonders bevorzugter Weise die Acrylsäure-, Methacrylsäure-oder Crotonsäureester mehrwertiger aliphatischer Alkohole und/oder Aminoalkohole.

In einer weiteren bevorzugten Ausführungsform enthalten die erfindungsgemäßen Zusammensetzungen solche Verbindungen der allgemeinen Formel (I), in der $R^3$ für mit Phosphatgruppen verbundene, geradkettige oder verzweigte Methoxy-, Ethoxy-, Propoxy-, Butoxy-, Pentoxy-oder Hexoxygruppen, also Alkoxygruppen mit 1 bis 6 C-Atomen im geradkettigen oder verzweigten Alkylenrest, steht. Derartige polymerisierbare Monomere der allgemeinen Formel (I) sind also Doppelester einer der oben genannten ungesättigten Carbonsäuren und der Phosphorsäure.

In einer weiteren bevorzugten Ausführungsform enthalten die erfindungsgemäßen Zusammenseztungen polymeri sierbare Monomere aus der Gruppe der Verbindungen der allgemeinen Formel (II), in der $R^2$ -wie auch oben in der allgemeinen Formel (I) - für Wasserstoff oder eine Methylgruppe steht und $R^4$ und $R^5$ unabhängig voneinander für Wasserstoff, Alkanoylgruppen mit 1 bis 4 C-Atomen im Alkylrest der zugehörigen Carbonsäuren oder Arylreste stehen, die gegebenenfalls durch Doppelbindungen aufweisende Gruppen substituiert sind. Die Verbindungen der allgemeinen Formel (II) können also Derivate von Dicarbonsäuren, wie beispielsweise der Maleinsäure, sein; in diesem Fall seht in der oben angegebenen allgemeine Formel (II) $R^2$ für Wasserstoff und $R^4$ und $R^5$ jeweils für eine Carboxylgruppe, also eine Alkanoylgruppe im Sinne der oben genannte Definition mit 0 C-Atomen im Alkylrest der zugehörigen Carbonsäure. Genauso ist es natürlich möglich, daß die Reste $R^4$ und $R^5$ für Alkanoylgruppen höherer Carbonsäuren stehen, beispielsweise solcher Carbonsäuren, die 1 bis 4 C-Atome im Alkylrest der Carbonsäure aufweisen. Von den oben genannten Derivaten der Maleinsäure, die erfindungsgemäß als polymerisierbares Monomeres in dem Zusammensetzungen eingesetzt werden kann, werden bevorzugt deren Ester mit ein-oder mehrwertigen Hydroxyverbindungen verwendet. Als solche Hydroxygruppen aufweisende Verbindungen sind - wie auch im Falle der oben genannten Ester der Acryl-oder Methacrylsäure - einwertige oder auch höherwertige Alkohole anzusehen. Neben den Derivaten ungesättigter Dicarbonsäuren kann das polymerisierbare Monomere in den erfindungsgemäßen Zusammensetzungen jedoch auch eine Verbindung der allgemeinen Formel (II) sein, in der $R^4$ für bestimmte Arylreste steht, die gegebenenfalls auch noch durch Doppelbindungen aufweisende Gruppen substituiert sein können. Im einfachsten, keine weiteren Substituenten am Arylrest aufweisenden Fall handelt es sich dabei um Verbindungen wie Styrol oder auch Divinylbenzol; diese Verbindungen sind als polymerisierbare Monomere in den erfindungsgemäßen Zusammensetzungen ebenfalls besonders bevorzugt. Es ist jedoch auch möglich, höhere und gegebenenfalls auch substituierte Arylreste in Verbindungen der allgemeinen Formel (II) an den durch die Reste $R^4$ und $R^5$ bezeichneten Stellen vorzusehen.

Aus praktischen Erwägungen wird als polymerisierbares Monomeres in dem erfindungsgemäßen Verfahren Methylmethacrylat verwendet. Es werden durchaus zufriedenstellende bis gute Resultate in den Scherfestigkeiten beobachtet.

Eine weitere im erfindungsgemäßen Verfahren zu verwendende essentielle Komponente ist der durch elektromagnetische Strahlung anregbare Sensibilisator. Derartige Sensibilisatoren sind für polymerisierbare Systeme aus dem Stand der Technik bekannt. Vorliegend wird jedoch erstmals eine Zusammensetzung mit dem Ziel der Eignung für ein Klebeverfahren für nicht transparente Substrate angegeben, das mit Hilfe eines durch elektromagnetische Strahlung anregbaren Sensibilisators und eines durch Energieübertragung durch diesen anregbaren Photoinitiators arbeitet. Derartige Systeme sind auf dem Gebiet der Klebstoffe, insbesondere der Ein-Komponenten-Klebstoffe, weder bekannt noch naheliegend. Die für das erfindungsgemäße Verfahren verwendbaren Zusammensetzungen enthalten einen derartigen, durch Elektromagnetische Strahlung anregbaren Sensibilisator in einer Menge im Bereich von 0,01 bis 2 Gew.-%, bevorzugt in einer Menge von 0,1 bis 0,5 Gew.-%. Derartige, vergleichsweise geringe Mengen des Sensibilisators reichen in vollem Umfang aus, um die von außen dem System zugeführte elektromagnetische Strahlung zu absorbieren und in der Folge auf das Photoinitiator-Molekül bzw. danach auf die einzelnen Monomeren unter Ingangsetzung der Polymerisation zu übertragen.

Bevorzugt werden in den erfindungsgemäßen Zusammensetzungen solche Sensibilisatoren verwendet, die durch elektromagnetische Strahlung im Bereich von 300 bis 800 nm, bevorzugt im Bereich von 350 bis 700 nm anregbar sind. Der wesentliche Vorteil ist darin zu sehen, daß für die Anregung des Sensibilisators Licht des sichtbaren Wellenlängenbereiches verwendet werden kann und damit die Initiierung der Polymerisation grundsätzlich dadurch möglich ist, daß man das System diffusem Tageslicht oder gezielt zugeführter Strahlung aus dem sichtbaren Bereich des elektromagnetischen Spektrums aussetzt.

Wie allgemein bekannt ist, wird durch die Bestrahlung der Sensibilisator vom Grundzustand in den "Singlett-Zustand" angeregt, der jedoch eine zu geringe Lebensdauer hat, um eine Energieübertragung vom Sensibilisator auf ein anderes Molekül zu ermöglichen. Vielmehr findet unmittelbar nach der Anregung gleich ein Übergang in den energieärmeren "Triplett-Zustand" statt, der üblicherweise eine ausreichend lange Lebendauer hat, um eine Übertragung der Energie vom Sensibilisator auf das nachfolgend anzuregende Molekül zu ermöglichen. Die erfindungsgemäßen Zusammensetzungen enthalten in einer besonders

bevorzugten Ausführungsform solche durch elektromagnetische Strahlung im sichtbaren Bereich anregbare Sensibilisatoren, die eine Triplett-Zustand-Lebensdauer im Bereich von 1 µsec bis 1 sec aufweisen. Eine Lebensdauer in diesem Bereich garantiert vorteilhafterweise eine Übertragung der Anregungsenergie vom Sensibilisator auf den nachfolgend näher zu beschreibenden Photoinitiator, so daß ohne Energieverlust eine Initiierung der Polymerisationsreaktion möglich ist.

Als Sensibilisatoren, die nicht nur durch elektromagnetische Strahlung im oben genannten Wellenlängenbereich anregbar sind, sondern auch eine Lebensdauer im oben angegebenen Bereich aufweisen, fungieren mit Vorteil lichtempfindliche Farbstoffe. Bevorzugt werden als Sensibilisatoren Farbstoffe aus der Gruppe Thiazin-, Azin-, Fluorenon-, Cyanin-, Acrdin-und Xanthenfarbstoffe wie Acridingelb, Acridinorange, Methylenblau, Methylengrün, Thionin, Fluorescein, Eosin, Pinacyanolchlorid, Bengalrosa, 9-Fluorenon-4-carbonsäure und 9-Fluorenon-4-carbonsäureperester. Aus der oben genannten Gruppe werden aufgrund ihrer guten Anregbarkeit durch elektromagnetische Strahlung im sichtbaren Bereich des Spektrums sowie einer für Folgereaktionen ausreichend langen Triplettzustand-Lebensdauer die Farbstoffe aus der Phenothiazinreihe bevorzugt, also Verbindungen wie Methylenblau, Methylengrün oder Thionin.

Ein weiterer im erfindungsgemäßen Verfahren zu verwendender essentieller Bestandteil ist ein oxidierbarer Photoinitiator, wobei dieser in den einzusetzenden Zusammensetzungen in Mengen von 0,01 bis 5 Gew.-%, bevorzugt in Mengen von 0,3 bis 2,0 Gew.-%, enthalten sein soll. Auch eine derart geringe Menge an Photoinitiator ist in der Lage, nach Bestrahlung der Zusammensetzungen mit Licht und Übertragung der adsorbierten Energie vom Sensibilisator auf den Photoinitiator eine

Erfindungsgemäß enthalten die Zusammensetzungen als Initiator eine durch einen Sensibilisator photoxidierbare organische Verbindung. Darunter sind allgemein diejenigen entsprechend der Erfindung bevorzugten organischen Verbindungen zu verstehen, die mit einem der Sensibilisatoren aus der oben genannten Gruppe, der durch Lichtenergie angeregt wurde, unter Elektronenabgabe reagieren und dabei energiereiche Radikale bilden, die die nachfolgend zu initiierende Polymerisationsreaktion zu initiieren vermögen.

In einer bevorzugten Ausführungsform des erfindungsgemäßen Verfahrens verwendet man Zusammensetzungen, die als Initiator enthalten eine Verbindung der allgemeinen Formel (III)

$$R^6\text{-}\overset{\overset{\large O}{\|}}{S}\text{-}OR^7 \qquad \text{(III)}$$

in der

$R^6$ für einen geradkettigen oder verzweigten Alkylrest mit 1 bis 6 C-Atomen, einen Hydroxyalkylrest mit 1 bis 6 C-Atomen in der Alkylengruppe oder einen gegebenenfalls substituierten Arylrest und

$R^7$ für Wasserstoff oder ein Alkalimetall, Erdalkalimetall oder Übergangsmetall steht, wobei in dem Fall, in dem $R^7$ für Erdalkali-oder Übergangsmetalle steht, der Rest $R^7$ jeweils eine Wertigkeit eines mehrwertigen Metallatoms bedeutet.

Es kommen somit allgemein Sulfinsäuren der allgemeinen Formel (III) oder deren Derivate als Photoinitiator in besonders bevorzugter Weise in Frage. Der Rest $R^6$ kann dabei ein Rest aus der Gruppe Methyl, Ethyl, Propyl, Butyl, Pentyl oder Hexyl sein, wobei die genannten Alkylreste sowohl geradkettig als auch verzweigt sein können. Es kommen außerdem Verbindungen der allgemeinen Formel (III), also Sulfinsäuren, in Frage, in denen $R^6$ für einen Hydroxyalkylrest mit 1 bis 6 C-Atomen in der Alkylengruppe steht; darunter fallen also Reste aus der Gruppe Hydroxymethyl, Hydroxyethyl, Hydroxypropyl, Hydroxybutyl, Hydroxypentyl und Hydroxyhexyl, wobei geeignete Initiatoren sowohl solche mit Hydroxyalkylgruppen mit unverzweigten Alkylenresten als auch solche mit verzweigten Alkylenresten sind; erstere sind jedoch erfindungsgemäß bevorzugt. In einer besonders bevorzugten Ausführungsform werden jedoch als Initiatorenkomponenten der erfindungsgemäßen Zusammensetzungen solche Verbindungen der allgemeinen Formel (III) verwendet, in denen $R^6$ für einen Arylrest steht. Derartige Arylreste können einfach oder mehrfach substituiert sein. Besonders gut geeignet aufgrund ihrer guten Initiatorwirkung sind beispielsweise einfach oder mehrfach substituierte Phenylreste oder einfach oder mehrfach substituierte Paratoluylreste. Mit besonderem Vorteil sind diejenigen Verbindungen der allgemeinen Formel (III) als Initiator verwendbar, die aus der Gruppe Benzolsulfinsäure, p-Toluolsulfinsäure und deren Alkalimetall-, Erdalkalimetall-und Übergangsmetallsalzen stammen.

$R^7$ in der oben genannten allgemeinen Formel (III) steht dabei für Wasserstoff oder ein Alkalimetall, Erdalkalimetall, Übergangsmetall und/oder Aminsalze. Besonders bevorzugt werden - wie oben angegeben - die freien Sulfinsäuren, also Verbindungen der allgemeinen Formel (III), in denen $R^7$ für Wasserstoff steht. Diejenigen Zusammensetzungen, in denen Metallsalze der freien Sulfinsäure der allgemeinen Formel (III) als Initiatorkomponenten Verwendung finden, enthalten dann als Alkalimetallsalze beispielsweise die Lithium-, Natrium-oder Kaliumsalze; als Erdalkalimetallsalze die Magnesium-, Kalzium, Strontium-oder Bariumsalze; als Übergangsmetallsalze können beispielsweise die Salze von Übergangsmetallen verwendet werden, die aus der ersten Reihe der Gruppe der Übergangsmetalle stammen und beispielsweise die

Chrom-, Mangan-, Eisen-, Kobalt-, Nickel-, Kupfer-oder Zinksalze der freien Sulfinsäuren der allgemeinen Formel (III) umfassen. Außer den oben beispielhaft genannten Salzen sind jedoch in speziellen Fällen auch andere salzartige Derivate der freien Sulfinsäuren der allgemeinen Formel (III) verwendbar.

Außer den nicht wasserlöslichen, polymerisierbaren Monomeren, dem durch elektromagnetische Strahlung anregbaren Sensibilisator und dem durch den angeregten Sensibilisator oxidierbaren Photoinitiator können die erfindungsgemäßen Zusammensetzungen gegebenenfalls übliche Verdickungsmittel, Haftungsverbesserer und Beschleuniger enthalten. Die Mengen der genannten Verbindung sind dabei in weiten Grenzen variabel; übliche Verdickungsmittel sind - sofern sie zugesetzt werden -in Mengen von 60 bis 40, insbesondere von 60 bis 10 Gew.-% in den erfindungsgemäßen Zusammensetzungen enthalten. Übliche Haftungsverbesserer werden in Mengen von 0,1 bis 10 Gew.-%, bevorzugt in Mengen von 0,4 bis 6 Gew.-%, übliche Beschleuniger in Mengen von 1 bis 50 ppm, bevorzugt in Mengen von 5 bis 25 ppm , zugesetzt.

Als übliche Verdickungsmittel können dabei alle - normalerweise polymeren - mehr oder weniger hochviskosen Zusätze gewählt werden, die üblicherweise derartigen zur Eignung als Klebstoffsysteme gedachten Zusammensetzungen zugesetzt werden. Dafür ist beispielsweise Polymethylmethacrylat zu nennen. Es ist jedoch auch möglich, als Verdickungsmittel hochdisperse Keiselsäure zuzusetzen. Diese kann das oben beispielhaft genannte Polymethylmethacrylat in Mengen von 1 bis 10 Gew.-% ersetzen.

Als Haftungsverbesserer werden üblicherweise zusätzlich Methacrylsäure oder Acrylsäure zugesetzt. Auch andere Haftungsverbesserer können in den Zusammensetzungen enthalten sein, wie etwa copolymerisierbare polare Gruppen enthaltende (Meth)acrylmonomere, z.B. Hydroxyethyl(meth)arylsäureester.

In einer weiteren bevorzugten Ausführungsform der vorliegenden Erfindung kann den Zusammensetzungen ein üblicher Beschleuniger zugesetzt werden, wenn besonders schnelle Aushärtungszeiten erwünscht sind. Solche Beschleuniger werden üblicherweise dann eingesetzt, wenn als Initiator keine Übergangsmettalsalze der Sulfinsäuren der allgemeinen Formel (III) eingesetzt wur den. Besonders bevorzugt sind Beschleuniger aus der Gruppe der in organischen Lösungsmitteln löslichen Schwermetallsalze, von denen mit Vorteil Kupferacetylacetonat, Vanadiumacetylacetonat, Eisen(III)acetylacetonat und Eisen(III)-napthenat bevorzugt verwendet werden. Dabei ist es möglich, einen der Beschleuniger aus der genannten Gruppe allein zur Verkürzung der Aushärtzeiten zuzusetzen, ebenso wie man auch mehrere in Kombination miteinander einsetzen kann.

Der besondere, wesentliche Vorteil der erfindungsgemäßen und oben näher beschriebenen Zusammensetzungen liegt darin, daß zur Auslösung des Polymerisationsvorgangs, also der Vernetzung, eine kurzzeitige Bestrahlung der aus den oben genannten Komponenten bestehenden Zusammensetzungen durch Licht des sichtbaren Wellenlängenbereiches genügt und danach - im Gegensatz zu allen anderen bisher bekannten Systemen dieser Art -der Polymerisationsvorgang nach Beendigung der Bestrahlung fortgeführt wird. Dies bedeutet, daß eine kurzzeitige Bestrahlung der Mischungen ausreicht, um die Vernetzung, also den Beginn des Klebevorganges, in Gang zu setzen, die Polymerisationsmischung jedoch auch in der Dunkelheit weiterreagiert. Dies ermöglicht in vorteilhafter Weise, die erfindungsgemäßen Zusammensetzungen als Klebstoffsysteme zur Verklebung von nichttransparenten Substraten - wie auch transparenten - zu verwenden. Im Gegensatz zu allen anderen vergleichbar zusammengesetzten Klebstoffsystemen, die während des gesamten Aushärtvorgangs bestrahlt werden mußten und deswegen nur zur Verklebung transparenter Substrate geeignet waren, können die vorliegenden Zusammensetzungen auch in der Dunkelheit der Klebefuge weiterreagieren und ermöglichen damit auch die Verklebung der nichttransparenten Substrate.

Bisher war es nicht möglich, derartige Klebesysteme ohne permanente Bestrahlung zur Aushärtung zu bringen. Die vorliegend vorgeschlagene Zusammensetzung ermöglicht dies nun in einfacher und technisch bequem durchführbarer Form. Dabei werden mit Zusammensetzungen der erfindungsgemäßen Art Zugscherfestigkeiten erreicht, wie sie auch bisher bekannte, eine permanente Belichtung erfordernde Kleber erreichen konnten.

Weiterhin ist es aus Sicht des Anwenders als erheblicher Vorteil anzusehen, daß die erfindungsgemäßen Zusammensetzungen als Ein-Komponenten-System formuliert sind und damit eine wesentlich einfachere Handhabung bei der Verwendung ermöglichen.

Die Erfindung wird durch die nachfolgenden Beispiele näher erläutert.

Beispiel 1

Herstellung der erfindungsgemäßen Zusammensetzung.

Aus 45 g Methylmethacrylat, 40 g Polymethylmethacrylat und 5 g Methacrylsäure wurde eine Monomergrundmischung hergestellt.

50 g einer derart zusammengesetzten Grundmischung wurden mit verschiedenen Mengen an Methylenblau versetzt; weitere 50 g der Grundmischung wurden mit 0,5 g des Natriumsalzes der p-Toluolsulfinsäure versetzt. Beide Komponenten wurden getrennt voneinander gut durchmischt. Im Dunkeln wurden beide Lösungen, die keine ungelösten Feststoffe mehr enthielten, 20 min unter kräftigem Rühren miteinander innig vermischt.

Entfettete und durch Sandstrahlung oberflächenbehandelte Eisenbleche wurden beidseitig mit der Zusammensetzung eingestrichen und nach Einwirkung von diffusem Tageslicht (3 min) auf einer Fläche von 250 $mm^2$ aufeinandergelegt und mit einer Holzklammer fixiert.

Die Zugscherfestigkeiten der so gebildeten Verklebungen wurden nach DIN 53 281/3 ermittelt. Die Ergebnisse sind der nachfolgenden Tabelle 1 zu entnehmen.

Tabelle 1

Zugscherfestigkeiten (ZSF) von Fe-Fe-Verklebungen; Sulfinatkonzentration: 0,5 Gew.-% in Abhängigkeit von der Konzentration an Methylenblau.

| Konz. an Methylenblau in Gew.-(%) | ZSF ($N.mm^{-2}$) nach 1 Tag | ZSF ($N.mm^{-2}$) nach 7 Tagen |
|---|---|---|
| 0,01 | 4,9 | 6,6 |
| 0,3 | 13,4 | 13,5 |
| 0,4 | 10,3 | 16,7 |
| 0,5 | 16,3 | 19,8 |
| 1,0 | 9,7 | 11,8 |

Beispiel 2

Entsprechend der in Beispiel 1 angegebenen Vorgehensweise wurden Klebemischungen hergestellt, denen zusätzlich 5 ppm Kupfer(II)acetylacetonat als Beschleuniger zugesetzt wurde. Die Zugscherfestigkeiten der mit einer derartigen Klebemischung erhaltenen Verklebungen von Eisenblechen sind der nachfolgenden Tabelle 2 zu entnehmen.

## Tabelle 2

Zuscherfestigkeiten von Fe-Fe-Verklebungen. Sulfinatkonzentration: 0,5 Gew.-%; Beschleunigerkonzentration: 5 ppm Kupferacetylacetonat; wechselnde Mengen an Methylenblau

| Konz. an Methylenblau in Gew.-% | ZSF ($N.mm^{-2}$) nach 1 Tag | ZSF ($N.mm^{-2}$) nach 7 Tagen |
|---|---|---|
| 0,3 | 21,2 | 25,8 |
| 0,4 | 20,8 | 24,9 |
| 0,5 | 20,6 | 23,5 |

Beispiele 3 und 4

Entsprechend der in den Beispielen 1 und 2 angegebenen Vorgehensweise wurden erfindungsgemäße Zusammensetzungen hergestellt, die

-(Beispiel 3) eine Sulfinatkonzentration von 0,25 Gew.-% aufwiesen und keinen Beschleuniger enthielten bzw.

-(Beispiel 4) eine Sulfinatkonzentration von 0,25 Gew.-% aufwiesen und 5 ppm Kupfer(II)-acetylacetonat als Beschleuniger enthielten.

Die Ergebnisse (Zugscherfestigkeiten der Fe-Fe-Verklebungen) sind den nachfolgenden Tabellen 3 und 4 zu entnehmen.

## Tabelle 3

ZSF von Fe-Fe-Verklebungen. Sulfinatkonzentration: 0,25 Gew.-%; wechselnde Mengen an Methylenblau.

| Konz. an Methylenblau in Gew.-% | ZSF ($N.mm^{-2}$) nach 1 Tag | nach 7 Tagen |
|---|---|---|
| 0,1 | 11,7 | 15,6 |
| 0,2 | 15,5 | 17,2 |
| 0,3 | 11,7 | 13,1 |
| 0,4 | 15,5 | 20,6 |
| 0,5 | 14,5 | 17,5 |

## Tabelle 4

ZSF von Fe-Fe-Verklebungen. Sulfinat-Konzentration: 0,25 Gew.-%; Beschleunigerkonzentration: 5 ppm Kupferacetylacetonat; wechselnde Mengen an Methylenblau.

| Konz. an Methylenblau in Gew.-% | ZSF ($N.mm^{-2}$) nach 1 Tag | nach 7 Tagen |
|---|---|---|
| 0,1 | 14,8 | 19,3 |
| 0,2 | 18,1 | 18,0 |
| 0,3 | 16,9 | 17,3 |
| 0,4 | 16,2 | 19,9 |
| 0,5 | 17,9 | 21,9 |

### Beispiel 5

Die in Beispiel 1 angegebene Klebstoffgrundmischung wurde dadurch modifiziert, daß zu 90 g in Beispiel 1 angegebener Grundmischung weitere 10 g Triethylenglykoldimethacrylat zugegeben wurden. Die Sulfinatkonzentration betrug 0,5 gew.-%, die Konzentration an Methylenblau lag bei 0,4 Gew.-%. Zusätzlich wurden zu der so hergestellten Klebstoffmischung

(a) kein Beschleuniger,

(b) 5 ppm Kupfer(II)acetylacetonat und

(c) 5 ppm Vandium(III)acetylacetonat zugegeben. Die Werte für die Zugscherfestigkeiten der mit dieser Klebstoffmischung hergestellten Fe-Fe-Verklebungen sind der nachfolgenden Tabelle 5 zu entnehmen und zwar jeweils nach 1 und nach 7 Tagen Lagerung bei 25°C.

Tabelle 5

Sulfinatkonzentration: 0,5 Gew.-%.

| ZSF ($N.mm^{-2}$) | | | | | |
|---|---|---|---|---|---|
| (a) 1 Tag | (a) 7 Tagen | (b) 1 Tag | (b) 7 Tagen | (c) 1 Tag | (c) 7 Tagen |
| 10,1 | 15,0 | 22,0 | 26,1 | 21,7 | 22,3 |

Beispiel 6

Aus jeweils 40 g Polymethylmethacrylat und 5 g Methacrylsäure wurde zusammen mit jeweils 45 g der nachstehend aufgeführten Monomeren eine Grundmischung hergestellt:

(a) Ethylmethacrylat (EtMA);
(b) Tetrahydrofurfurylmethacrylat (THF-MA) und
(c) 2-Phenylethylmethacrylat (PhEtMA).

Die Methylenblau-Konzentration betrug in allen Mischungen 0,5 Gew.-% und die des Natriumsalzes der p-Toluolsulfinsäure 0,5 Gew.-%. Zudem enthielten alle Zusammensetzungen 5 ppm Kupfer(II)acetylacetonat als Beschleuniger. Die Ergebnisse der Zugscherfestigkeiten der mit dieser Klebemischung durchgeführten Fe-Fe-Verklebungen sind der nachfolgenden Tabelle 6 zu entnehmen.

Tabelle 6

ZSF von Fe-Fe-Verklebungen

| Eingesetzte Monomermischung | ZSF ($N . mm^{-2}$) nach 1 Tag | nach 7 Tagen |
|---|---|---|
| a) EtMA | 18,3 | 19,4 |
| b) THF-MA | 22,3 | 17,4 |
| c) PhEtMA | 16,5 | 17,1 |

Beispiel 7

Es wurde ein Klebstoff zur Fe-Fe-Bleckverklebung aus folgenden Bestandteilen hergestellt:

45 g Methylmethacrylat
40 g Polymethylmethacrylat

10 g Triethylenglykoldimethacrylat
5 g Methacrylsäure
0,4 g Methylenblau
0,5 g Na-Salz der p-Toluolsulfinsäure

Vor Auftrag des Klebstoffs wurden die Bleche mit einer 1 %igen Lösung von Kupferacetonylacetat im Methylenchlorid eingestrichen und an der Luft getrocknet. Nach 24 h Lagerung bei Zimmertemperatur wurde eine durchschnittliche Scherfestigkeit von 13,5 N.mm $^{2}$ gemessen.

## Ansprüche

1. Verfahren zum Verkleben von nicht transparenten Flächen mittels Photoinitiatoren und Sensibilisatoren vernetzbaren, ethylenische Doppelbindungen enthaltende Monomersystemen, dadurch gekennzeichnet, daß man wasserfreie Systeme aus
(a) ein oder mehrere ethylenische Doppelbindungen aufweisenden, polymerisierbaren Monomeren,
(b) durch elektromagnetische Strahlung anregbaren Sensibilisatoren,
(c) oxidierbare Photoinitiatoren sowie gegebenenfalls
(d) üblichen Verdickungsmitteln, Haftungsverbesserern und Beschleunigern
auf wenigstens eine der zu verklebenden Flächen aufbringt und nach Belichtung für eine begrenzte Zeit die Flächen zusammenfügt und den initiierten Härtungsvorgang weiterlaufen läßt, bis eine feste Bindung entstanden ist.

2. Verwendung von wasserfreien Zusammensetzungen nach Anspruch 1, dadurch gekennzeichnet, daß sie bestehen aus
(a) flüssigen ein oder mehrere ethylenische Doppelbindungen aufweisenden polymerisierbare Monomeren in einer Menge von 40 bis 90 Gew.-%,
(b) durch elektromagnetische Strahlung anregbaren Sensibilisatoren in einer Menge von 0,01 bis 2 Gew.-%,
(c) oxidierbaren Photoinitiatoren in einer Menge von 0,01 bis 5 Gew.-% sowie
(d) übliche Verdickungsmitteln in Mengen von 60 bis 5 Gew.-% und/oder üblichen Haftungsverbesserern in Mengen von 0,1 bis 10 Gew.-% und/oder
üblichen Beschleunigern in Mengen von 1 bis 50 ppm enthalten, wobei sich alle Mengenangaben auf das Gesamtgewicht der Zusammensetzung beziehen.

3. Zusammensetzungen nach Anspruch 2, dadurch gekennzeichnet, daß sie
(a) ein oder mehrere polymerisierbare Monomere in Mengen von 30 bis 60 Gew.-%,
(b) einen durch elektromagnetische Strahlung anregbaren Sensibilisator in einer Menge im Bereich von 0,1 bis 0,5 Gew.-%,
(c) einen oxidierbaren Photoinitiator in einer Menge im Bereich von 0,3 bis 2,0 Gew.-% sowie gegebenenfalls
(d) übliche Verdickungsmittel in einer Menge im Bereich von 60 bis 10 Gew.-%,
übliche Haftungsverbesserer in einer Menge im Bereich von 0,4 bis 6 Gew.-% und
übliche Beschleuniger in einer Menge im Bereich von 5 bis 25 ppm
enthalten.

4. Zusammensetzungen nach Ansprüchen 2 bis 3, dadurch gekennzeichnet, daß sie ein polymerisierbares Monomeres aus der Gruppe der Verbindungen der allgemeinen Formeln (I) und (II) enthalten

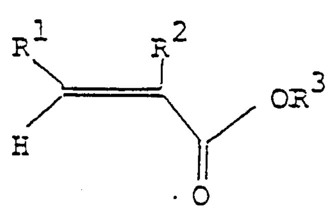 (I)

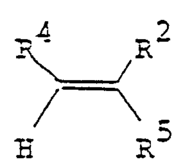 (II)

in denen
$R^1$ und $R^2$ unabhängig voneinander für Wasserstoff oder $CH_3$,

$R^3$ für geradkettige oder verzweigte Alkylreste mit 1 bis 8 C-Atomen oder für durch eine oder mehrere Hydroxy-oder Aminogruppen substituierte, geradkettige oder verzweigte Alkylreste mit 1 bis 8 C-Atomen in der Alkylengruppe oder mit Phosphatgruppen verbundene Alkoxygruppen mit 1 bis 6 C-Atomen in der Alkylengruppe und

$R^4$ und $R^5$ unabhängig voneinander für Wasserstoff, Alkanoylgruppen mit 1 bis 4 C-Atomen im Alkylrest der zugehörigen Carbonsäure oder Arylreste, die gegebenenfalls durch Doppelbindungen aufweisende Gruppen substituiert sind, mit der Maßgabe stehen, daß nicht beide Reste $R^4$ und $R^5$ gleichzeitig für Wasserstoff stehen.

5.Zusammensetzungen nach Ansprüchen 2 bis 5, dadurch gekennzeichnet, daß sie ein polymerisierbares Monomeres aus der Gruppe Acrylsäureester und Methacrylsäureester ein-und mehrwertiger aliphatischer Alkohole, Acrylsäureester und Methacrylsäureester mehrwertiger Hydroxyverbindungen, Crotonsäureester und Maleinsäureester ein-und mehrwertiger aliphatischer Alkohole, Vinylacetat, Divinylbenzol, Styrol, 2-Acryloylphosphat und 2-Methacryloylphosphat enthalten.

6. Zusammensetzung nach Ansprüchen 2 bis 5, dadurch gekennzeichnet, daß sie einen durch elektromagnetische Strahlung im Bereich von 300 bis 800 nm, bevorzugt im Bereich von 350 bis 700 nm, anregbaren Sensibilisator enthalten, dessen durch elektromagnetische Strahlung anregbare Triplettzustand-Lebensdauer im Bereich von 1 msec bis 1 sec liegt.

7. Zusammensetzung nach Ansprüchen 2 bis 6, dadurch gekennzeichnet, daß sie als Sensibilisatoren Farbstoffe aus der Gruppe der Thiazin-, Azin-, Fluorenon-, Cyanin-, Acridin-und Xanthenfarbstoffe enthält.

8. Zusammensetzung nach Ansprüchen 2 bis 7, dadurch gekennzeichnet, daß sie als Initiator eine durch einen Sensibilisator photooxidierbare organische Verbindung enthalten.

9. Zusammensetzung nach Ansprüchen 2 und 8, dadurch gekennzeichnet, daß sie als Initiator eine Verbindung der allgemeinen Formel (III) enthalten

$$R^6-\overset{O}{\overset{\|}{S}}-OR^7 \quad (III)$$

in der

$R^6$ für einen geradkettigen oder verzweigten Alkylrest mit 1 bis 6 C-Atomen, einen Hydroxyalkylrest mit 1 bis 6 C-Atomen in der Alkylengruppe oder einen gegebenenfalls substituierten Arylrest und

$R^7$ für Wasserstoff oder ein Alkalimetall, Erdalkalimetall, Übergangsmetall und/oder Aminsalze stehen.

10. Zusammensetzungen nach Ansprüchen 2 bis 9, dadurch gekennzeichnet, daß sie als Initiator eine Verbindung der allgemeinen Formel (III) enthalten, in der $R^6$ für einen einfach oder mehrfach substituierten Phenylrest oder einen einfach oder mehrfach substituierten p-Toluylrest steht.

11. Zusammensetzungen nach Ansprüchen 2 bis 10, dadurch gekennzeichnet, daß sie als Initiator eine Ver bindung aus der Gruppe Benzolsulfinsäure, p-Toluolsulfinsäure und deren Alkalimetallsalze, Erdalkalimetallsalze, Übergangsmetallsalze und/oder Aminsalze enthalten.

12. Zusammensetzungen nach Ansprüchen bis 11, dadurch gekennzeichet, daß sie als Haftungsverbesserer zusätzlich freie Methacrylsäure, Acrylsäure sowie polare Gruppen enthaltende (Meth)-acrylsäuremonomere enthalten.

13. Zusammensetzungen nach Ansprüchen bis 12, dadurch gekennzeichnet, daß sie als Beschleuniger zusätzlich ein oder mehrere, in organischen Lösungsmitteln lösliche Schwermetallsalze enthalten.

14. Zusammensetzungen nach Ansprüchen bis 13, dadurch gekennzeichnet, daß sie als Beschleuniger Verbindungen aus der Gruppe Kupfer(II)acetylacetonat, Vanadium(III)acetylacetonat, Eisen(III)acetylacetonat, Eisen(III)naphthenat und Kobaltnaphthenat enthalten.

15. Verfahren zum Verkleben mit den Zusammensetzungen nach Ansprüchen 2 bis 14 von nicht transparenten, insbesondere metallische Oberflächen aufweisenden Werkstoffen.

16. Verfahren zum Verkleben nach Anspruch 15, dadurch gekennzeichnet, daß man die mit den Zusammensetzungen nach Ansprüchen 2 bis 14 versehenen Flächen etwa 1 bis 30 Minuten dem Tageslicht aussetzt und dann zusammenfügt und unter einem Druck von 1 - 200 mPa während 2 - 24 Stunden aussetzt.